# EUROPEAN PATENT SPECIFICATION

(11) **EP 3 233 486 B1**
(45) Date of publication and mention of the grant of the patent: **25.07.2018**
(21) Application number: 15821205.0
(22) Date of filing: 15.12.2015
(51) Int. Cl.: B32B 27/08, B32B 7/06, B32B 27/34, B29C 47/06

(54) **MULTILAYER FILM STRUCTURES COMPRISING DELAMINATION LAYER**
MEHRSCHICHTIGE FILMSTRUKTUREN MIT DELAMINIERUNGSSCHICHT
STRUCTURES DE FILM MULTICOUCHE COMPORTANT UNE COUCHE DE DÉLAMINAGE

(30) Priority: 19.12.2014 US 201462094145 P
(43) Date of publication of application: 25.10.2017
(73) Proprietor: E. I. du Pont de Nemours and Company, Wilmington, DE 19805 (US)
(72) Inventor: HAUSMANN, Karlheinz, 2012 Auvernier (CH); TROUILHET, Yves M., CH-1222 Vesenaz (CH); SCHIFFMANN, Juergen, 53773 Hennef (DE)
(74) Representative: Dannenberger, Oliver Andre
(86) International application number: PCT/US2015/065702
(87) International publication number: WO 2016/100277

(56) References cited:
- EP-A1- 2 746 048
- JP-A- 2014 184 971
- US-A1- 2006 172 131

## Description

### FIELD OF THE INVENTION

The invention relates to a coextruded multilayer film structure obtainable in a triple bubble process comprising an external layer, a polyamide layer, a delamination layer and a sealant layer, which can be used in packaging applications, in particular in food packaging applications.

### BACKGROUND OF THE INVENTION

Multilayer film structures are complex assemblies that require careful combination of multiple functional layers in order to achieve a desired end-product having the required properties.

For example, in packaging solutions designed for packaging dry goods such as edible goods such as potato chips, cookies, candy, corn flakes and other breakfast cereals, dried vegetables, rice, coffee beans or ground coffee, nuts, or dairy powders, it is desirable that such packaging solutions, e.g. bags, exhibit a so-called "burst peel" opening behavior.

A package exhibiting burst peel is a package that opens from inside by a cohesive failure mechanism in the sealant layer, such as at the boundary between two film portions that are sealed to each other, when an initial opening force is applied to the seal. In the sealant layer, a resulting initial tear then propagates through the sealant until it encounters the interface between the sealant layer and an adjacent layer. At this point, the tear will then propagate along the interface between both layers and continue as a delamination until the package is opened.

Compositions exhibiting cohesive seal failure are described in U.S. Patents 5,516,583; 5,626,929; 5,830,547 and 5,965,254. Compositions exhibiting interfacial seal failure are described in U.S. Patent 8,541,073.

Concurrently, when choosing the different layers for a multilayer film destined to be used in a burst peel packaging solution, it is important to pick them such that the interfacial adhesion between the sealant layer and the adjacent layer is not too strong. If the adhesion between the two layers is too strong, the package will be too difficult to open, or in the worst case, the other layers of the multilayer film will tear at once and lead to an uncontrolled opening.

It follows that in view of the above considerations, the number of combinations of sealant layer and adjacent layer that may be used in burst peel packaging applications is limited to those in which the sealant layer and adjacent layer have sufficiently low adhesion to each other.

For most burst peel applications, it is generally desirable to include a polyester layer that serves as a mechanical support layer, e.g. a polyethylene terephthalate layer. However, polyester films only offer sufficient mechanical support when oriented bi-axially to a certain extent. Because such biaxial orientation cannot be achieved on current extrusion-blown film lines, a previously manufactured, bi-axially oriented, polyester is laminated to multilayer sealant films obtained on extrusion blown film lines to form the finished multilayer film that can be used for burst peel packaging applications. However, this lamination step complicates the manufacturing process of multilayer films for burst peel packaging applications and also represents an economic burden.

It is therefore highly desirable to provide a manufacturing process for multilayer films suitable to be used in a burst peel packaging applications and which process is not limited to existing sealant layer-adjacent layer combinations. It is furthermore desirable that such process results in a multilayer film that does not to have to be laminated to a previously manufactured mechanical support layer.

US2006172131 discloses a multilayer film for food packaging comprising at least a polymeric first sealable layer, a polymeric second layer, and a third layer, a peelable/releasable bond being formed between the first and second layers.

### SUMMARY OF THE INVENTION

This invention relates to a coextruded biaxially oriented food packaging film comprising the following layer structure positioned in order from the outside to the inside:
an outside surface layer comprising or consisting essentially of polyester, polyamide, polystyrene, polycarbonate, poly(methyl methacrylate), cyclic olefin copolymer, polypropylene, high density polyethylene, or combinations thereof, preferably polyester such as polyethylene terephthalate;
a polyamid layer in direct contact with the delamination layer;
a delamination layer in direct contact with the polyamide layer comprising an anhydride-modified polymer comprising a base polymer comprising a polyethylene homopolymer or copolymer, polypropylene homopolymer or copolymer, or an ethylene copolymer comprising copolymerized units derived from ethylene and at least one additional polar comonomer, preferably ethylene vinyl acetate copolymer, ethylene alkyl (meth)acrylate copolymer, wherein the base polymer is grafted with up to 1 weight % of an unsaturated dicarboxylic acid anhydride, preferably maleic anhydride; or an acid copolymer or ionomer thereof; wherein the adhesion between the polyamide layer and the delamination layer is from 0.1 to 10 N/15mm, preferably from 2 to 8 N/15mm; and
an inside surface sealant layer comprising or consisting essentially of a polyolefin polymer comprising a polyethylene homopolymer or copolymer, ethylene alkyl (meth)acrylate copolymer, or an ethylene alkyl (meth)acrylic acid copolymer or ionomer thereof, or mixtures thereof.

Preferably, the coextruded multilayer film is prepared by a triple bubble process, as described below.

In a further aspect, this invention provides for a triple bubble (3B) process for manufacturing a coextruded multilayer film structure, comprising the steps of coextruding a tubular multilayer film structure as described above, cooling the coextruded tubular multilayer film structure in a first bubble, mono- or bi-axially orienting the coextruded tubular multilayer film structure under heating in a second bubble, and thermofixing the bi-axially oriented coextruded tubular multilayer film structure under heating in a third bubble.

Pouches made with these structures can be characterized by different values of shrinkage when exposed to 90 °C hot water for 10 seconds, ranging from 2 to 70 % shrinkage. In addition they may exhibit secondary sealing so that adjacent film surfaces seal to each other under the influence of the atmospheric or the water pressure.

It was surprisingly found that pouches made with these structural features showed burst peel behavior, characterized by a high initiation force, followed by a lower propagation force. The invention also provides a pouch or flexible container prepared from the film described above, optionally containing a gusseted or fin seal, wherein a portion of the perimeter of the pouch is heat sealed (three or more sided sealed) with an initiation peel force greater than 15 N/15mm, leaving a portion of the perimeter unsealed to provide an opening to the interior of the pouch.

The invention further provides the pouch described above, containing a product in the interior of the pouch, wherein the opening is heat sealed, with a seal strength characterized by an initiation peel force less than about 13 N/15mm and a peel propagation force less than about 60% of the initiation force.

### BRIEF DESCRIPTION OF THE DRAWINGS

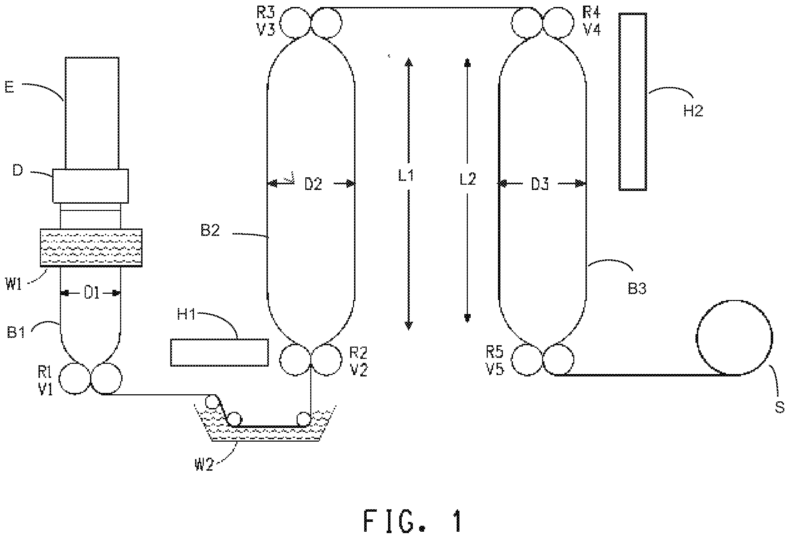

Figure 1 shows an schematic view of the triple bubble (3B) process according to the present invention.

### DETAILED DESCRIPTION

All references disclosed herein are incorporated by reference.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). As used herein, the terms "a" and "an" include the concepts of "at least one" and "one or more than one". The word(s) following the verb "is" or "are" can be a definition of the subject.

The term "consisting essentially of' in relation to film layer materials is to indicate that substantially (greater than 95 weight % or greater than 99 weight %) the only polymer(s) present in a component layer is the polymer(s) recited. Thus this term does not exclude the presence of additives, e.g. conventional film additives; i.e. each layer independently may contain conventional film additives such those described below. Moreover, such additives may possibly be added via a masterbatch that may include other polymers as carriers, so that minor amounts (less than 5 or less than 1 weight %) of polymers other than those recited may be present, wherein these minor amounts do not change the basic and novel characteristics of the invention.

When the term "about" is used in describing a value or an end-point of a range, the disclosure should be understood to include the specific value or end-point referred to.

Unless stated otherwise, all percentages, parts, ratios, etc., are by weight. Further, when an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range. When a component is indicated as present in a range starting from 0, such component is an optional component (i.e., it may or may not be present). When present an optional component may be at least 0.1 weight % of the composition or copolymer.

When materials, methods, or machinery are described herein with the term "known to those of skill in the art", "conventional" or a synonymous word or phrase, the term signifies that materials, methods, and machinery that are conventional at the time of filing the present application are encompassed by this description. Also encompassed are materials, methods, and machinery that are not presently conventional, but that may have become recognized in the art as suitable for a similar purpose.

As used herein, the term "copolymer" refers to polymers comprising copolymerized units resulting from copolymerization of two or more comonomers and may be described with reference to its constituent comonomers or to the amounts of its constituent comonomers such as, for example "a copolymer comprising ethylene and 15 weight % of acrylic acid". A description of a copolymer with reference to its constituent comonomers or to the amounts of its constituent comonomers means that the copolymer contains copolymerized units (in the specified amounts when specified) of the specified comonomers. Polymers having more than two types of monomers, such as terpolymers, are also included within the term "copolymer" as used herein. A dipolymer consists of two copolymerized comonomers and a terpolymer consists of three copolymerized comonomers.

"(Meth)acrylic acid" includes methacrylic acid and/or acrylic acid and "(meth)acrylate" includes methacrylate and/or acrylate. Alkyl (meth)acrylate refers to alkyl acrylate and/or alkyl methacrylate.

The term "when exposed (or heated) to a temperature of' refers to the temperature of the environment around the film such as the temperature of an oven in which the film is placed or the temperature of an oil or water bath in which the film is placed. It will be appreciated that if the film is present in an oven for a short period of time, the film itself may not heat to the oven temperature. For ease of measurement however, "when exposed to a temperature" refers to the temperature of the environment rather than the actual film temperature.

The term "outside" as used herein refers to the side of the packaging film that faces away from the contents of a package made from the film or in the case of a tubular film, the side of the tubular film that faces the exterior of the tubular film. When used to define the position of a layer in relation to another layer in the multilayer packaging film, "outside" refers to layer(s) farther away from the contents of the package than another layer or to a layer farther from the inside of the tubular film, even if neither layer is a surface layer. Likewise, the term "inside" refers to the side of the packaging film that faces toward the contents of a package made from the film or the side of a tubular film that faces the interior of the tube. When used to define the position of a layer in relation to another layer in the multilayer packaging film, "inside" refers to the layer(s) closer to the contents of the package or to a layer closer to the inside of the tubular film than another layer, even if neither layer is a surface layer. A surface layer has only one face of the layer in contact with another layer. The term "outside surface layer" refers to the surface layer farthest away from the contents of a package made from the film or the interior of a tubular film and the term "inside surface layer" refers to the surface layer closest to the contents of a package made from the film or the interior of a tubular film.

Peelable heat seals commonly can be designed to have three different failure modes when peeling seal to seal or seal to differentiated substrate. Failure can be interfacial, cohesive or delamination when peeling one from the other under stress at various angles of peel and speeds. Interfacial seals are designed to fail at the heat seal interface of the selected sealing surface (i.e., the sealant layer peels cleanly away from the substrate layer). In most cases seal strength is determined by temperature, pressure and dwell time. Cohesive seal failure by design fails within the actual sealant layer itself. When peeling the seal under stress and speed, the seal layer splits within itself and transfers a portion of the sealant material to the sealant substrate. Internal strength of the sealant material is the determining factor for actual strength of the heat seal.

Delamination heat seals are designed to fail at an internal interface of a multilayer film structure. This designed failure interface is at a chosen layer somewhere behind the actual heat seal layer in the film structure. In this case the entire sealant layer, the delamination layer and any intervening layers are removed from the remaining film as it is being peeled. Thickness and adhesion to the chosen internal layer interface will determine strength of the seal during peeling. Desirably, the adhesion of the delamination layer to the sealant layer, or intervening layer when present, is higher than the adhesion to the layer of the remaining film that it contacts.

The invention provides a multilayered two-dimensional or tubular food casing or food film which is in particular produced by a circular die extrusion process and biaxially oriented by the triple-bubble process, for food packaging such as, e.g., shrink films, sealable films, lidding films, wrapping films or the like, characterized by the following structure including (from the outside to the inside) at least a protective external layer, a polyamide layer, a delamination layer and a sealant layer. Depending on the compositions of the various functional layers, additional optional layers include a gas barrier layer and/or other adhesion layers that provide good adhesion between the various layers. For example, adhesion layers may be positioned between the external layer and the gas barrier layer and/or the polyamide layer.

The coextruded biaxially oriented film prepared by a triple bubble process allows for preparation of highly functional multilayer film in a single operation without the need to prepare separately a biaxially oriented mechanical support layer and laminating it to a second multilayer film to obtain the final structure. This greatly simplifies the manufacturing process for such films.

### External Layer

The outside surface layer, or external layer, of the food casing or food film provides the outside layer of a package and is the layer farthest from the packaged contents. When prepared as a tubular blown film, the outside surface layer is the outermost layer of the multilayer film.

The outside layer may comprise polyester, polyamide (PA), polystyrene (PS), polycarbonate (PC), poly(methyl methacrylate) (PMMA), cyclic olefin copolymer (COC), polypropylene (PP), polyethylene (PE) or combinations thereof, providing for the ability to weld or seal the films by extremely high temperatures without the film being bonded to the sealing terminal. As a result, higher cycle numbers may be achieved on the sealing machines. In addition the film is substantially less sensitive to external injury and possesses excellent optical properties such as gloss and transparency, making it useful for mechanical support and protection of the other layers of the film. Furthermore the film is particularly well suited for inscribing or printing.

Preferably, the external layer comprises or consists essentially of polyesters such as polyethylene terephthalate (PET). Polyesters provide excellent optical properties, such as gloss and transparency, and provide a high speed of further processing (cycle numbers) due to the high temperature resistance.

Alternatively, the external layer comprises polyamide. When the external layer comprises polyamide, it may also function as one of the polyamide layers that "sandwich" an EVOH oxygen barrier layer, as described more fully below. It may also serve as the "polyamide layer" that is in direct contact with the delamination layer, as described more fully below, in which case the external layer and the polyamide layer are encompassed in a single layer.

Alternatively, the external layer comprises polypropylene or polyethylene, preferably high density polyethylene (HDPE). When the external layer comprises PP or PE, it may provide a good barrier to moisture permeating from the exterior of the package.

Combinations of two or more layers having compositions such as described above may be used to provide the mechanical and/or protective functions of the external layer.

### Gas barrier laver

The film optionally may also comprise a gas barrier layer. The term "gas barrier layer" as used herein denotes a film layer that allows transmission through the film of less than 1000 cc of gas, such as oxygen, per square meter of film per 24 hour period at 1 atmosphere and at a temperature of 73°F (23°C) at 50% relative humidity. Preferably the barrier layer provides for oxygen transmission below 500, below 100, below 50, below 30 or below 15 cc/m²·day for the multilayer films. When factored for thickness the films preferably have oxygen permeation levels of less than 40 or less than 30 cc·mil/m²·day. Other polymers may be present as additional components in the barrier layer so long as they do not raise the permeability of the barrier layer above the limit defined above.

Suitable barrier layers may be chosen from layers comprising ethylene vinyl alcohol copolymer, cyclic olefin copolymers, polyvinyl acetate, or blends thereof with polyethylene, polyvinyl alcohol, or polyamide.

The gas barrier layer of the multilayer films preferably comprises ethylene vinyl alcohol polymers and mixtures thereof. Unless specified, the term "EVOH" is to be understood both as ethylene vinyl alcohol polymers and blends of ethylene vinyl alcohol polymers with other polymers.

EVOH polymers generally have an ethylene content of between about 15 mole % to about 60 mole %, more preferably between about 20 to about 50 mole %. The density of commercially available EVOH generally ranges from between about 1.12 g/cm³ to about 1.20 gm/cm³, the polymers having a melting temperature ranging from between about 142°C and 191°C. EVOH polymers can be prepared by well-known techniques or can be obtained from commercial sources. EVOH copolymers may be prepared by saponifying or hydrolyzing ethylene vinyl acetate copolymers. Thus EVOH may also be known as hydrolyzed ethylene vinyl acetate (HEVA) copolymer. The degree of hydrolysis is preferably from about 50 to 100 mole %, more preferably from about 85 to 100 mole %. In addition, the weight average molecular weight, M_{w}, of the EVOH component useful in the laminates of the invention, calculated from the degree of polymerization and the molecular weight of the repeating unit, may be within the range of about 5,000 Daltons to about 300,000 Daltons with about 60,000 Daltons being most preferred.

Suitable EVOH polymers may be obtained from Eval Company of America or Kuraray Company of Japan under the tradename Eval®. EVOH is also available under the tradename Soarnol™ from Nippon Goshei. Examples of such EVOH resins include EVAL® grades F101, E105, J102, and Soarnol™ grades DT2903, DT2904, DC3203 and ET3803. Preferably the EVOH used in the invention is orientable from about 3x3 to about 10x10 stretch without loss in barrier properties from pinholing, necking or breaks in the EVOH layer.

Of special note are EVOH resins sold under the tradename Eval® SP obtained from Eval Company of America or Kuraray Company of Japan that may be useful as components in the films of the invention. Eval® SP is a type of EVOH that exhibits enhanced plasticity and that is suited for use in packaging applications including shrink film, polyethylene terephthalate (PET)-type barrier bottles and deep-draw cups and trays. Examples of such EVOH resins include Eval® SP grades 521, 292 and 482. The Eval SP grades of EVOH are easier to orient than the conventional EVAL resins. These EVOH polymers are a preferred class for use in the multilayer film compositions described herein. Without being bound to theory, it is believed that the enhanced orientability of these resins derives from their chemical structure, in particular the level of head to head adjacent hydroxyl groups in the EVOH polymer chain. By head to head adjacent hydroxyl groups is meant 1,2-glycol structural units.

It has been found that EVOH polymers having a relatively high level of 1,2-glycol units in the EVOH polymer chain are particularly suited for use in multilayer films. For example about 2 to about 8 mol% 1,2-glycol structural units, preferably about 2.8 to about 5.2 mol% 1,2-glycol units may be present in the EVOH polymer chain.

Such polymers can be produced by increasing the amount of adjacent copolymerized units of vinyl acetate produced during polymerization of ethylene and vinyl acetate above the level generally used. When such polymers are hydrolyzed to form EVOH, an increased amount of head-to-head vinyl alcohol adjacency, that is, an increased amount of the 1,2-glycol structure result. It has been reported in the case of polyvinyl alcohol that the presence of the 1,2-glycol structure in polyvinyl alcohol can influence the degree of crystallinity obtained in these alcohols and thereby the tensile strength. See, for example F. L. Marten & C.W. Zvanut, Chapter 2 Manufacture of Polyvinyl Acetate for Polyvinyl Alcohol, Polyvinyl Alcohol Developments (C. A. Finch ed.) John Wiley, New York 1992.

The more orientable grades of EVOH will generally have lower yield strength, lower tensile strength and lower rates of strain hardening than other EVOH polymers of equivalent ethylene content, as measured by mol% of ethylene.

The EVOH composition may optionally be modified by including additional polymeric materials selected from the group consisting of polyamides, including amorphous polyamides such as MXD6, polyvinyl acetate (PVA), ionomers, and ethylene polymers and mixtures thereof. These modifying polymers may be present in amounts up to 30 weight % of the EVOH composition.

However, the oxygen barrier effectiveness of EVOH can be reduced by the presence of moisture. Therefore, it is desirable to protect the EVOH layer from moisture from the product contained within the package or from outside the package. As the barrier properties of EVOH may be influenced negatively by humidity, it is desirable that a moisture barrier layer be positioned between the EVOH layer and the moist contents of the package. For example, a polyolefin layer may be positioned between the sealant layer and the delamination layer to provide a moisture barrier between the interior of the package and the EVOH gas barrier layer.

In a preferred embodiment, the coextruded multilayer structure may comprise a layer of EVOH sandwiched between two layers of polyamide, one on each side of the EVOH layer. This leads to a maximum possible oxygen barrier and at the same time ensures excellent embedding and stabilization of the EVOH layer between the two polyamide layers as carrier layers.

### The polyamide laver

The multilayer structure comprises a polyamide layer in direct contact with the delamination layer.

Polyamides (e.g. nylon) suitable for use are generally prepared by polymerization of lactams or amino acids (e.g. nylon 6 or nylon 11), or by condensation of diamines such as hexamethylene diamine with dibasic acids such as succinic, adipic, or sebacic acid. The polyamides may also include copolymerized units of additional comonomers to form terpolymers or higher order polymers. The polyamide can include nylon 6, nylon 9, nylon 10, nylon 11, nylon 12, nylon 6,6, nylon 6,10, nylon 6,12, nylon 61, nylon 6T, nylon 6.9, nylon 12,12, copolymers thereof and blends of amorphous and semicrystalline polyamides. As used herein the term polyamide also includes polyamide nano-composites such as those available commercially under the tradename Aegis® polyamides from Honeywell International Inc. or Imperm® polyamide (nylon MXD6) from Mitsubishi Gas Chemical Company.

Preferred polyamides include polyepsiloncaprolactam (nylon 6); polyhexamethylene adipamide (nylon 6,6); nylon 11; nylon 12, nylon 12,12 and copolymers and terpolymers such as nylon 6/66; nylon 6,10; nylon 6,12; nylon 6,6/12; nylon 6/6, and nylon 6/6T, or blends thereof. More preferred polyamides are polyepsiloncaprolactam (nylon 6), polyhexamethylene adipamide (nylon 6,6), and nylon 6/66; most preferred is nylon 6. Although these polyamides are preferred polyamides, other polyamides, such as amorphous polyamides, are also suitable for use. Amorphous polyamides include amorphous nylon 6I,6T available from E. I. du Pont de Nemours and Company under the tradename SELAR® PA. Other amorphous polyamides include those described in US Patents 5,053,259; 5,344,679 and 5,480,945. Additional useful polyamides include those described in US Patents 5,408,000; 4,174,358; 3,393,210; 2,512,606; 2,312,966 and 2,241,322.

Alternatively the polyamide layers may comprise blends of PA and EVOH, or PA and PVA or PA and MXD6, respectively.

### The Delamination Layer

The delamination layer is in direct contact with the polyamide layer and its function is to provide delamination between the sealant portion of the film and the mecahnical support and optional barrier portions of the film. The adhesion between the polyamide layer and the delamination layer should be selected so that it provides sufficient adhesion to prevent delamination between the film layers during processing, package (such as a pouch) formation and package filling, yet low enough to provide easy peel propagation when the package is opened by the consumer to access the contents of the package.

Desirably, the adhesion between the polyamide layer and the delamination layer of the film is from 0.1 to 10 N/15mm, preferably from 2 to 8 N/15mm, before heat sealing to prepare and/or seal the package. In some instances, the adhesion between the polyamide layer and the delamination layer may increase when heat is applied to the film, such as during heat sealing. The increase in adhesion may be temperature dependent, with higher sealing temperatures leading to higher adhesion. For example, heat sealing below 160 °C may provide adhesion below 8 N/15mm. These properties provide a robust seal during transport and storage, while also providing an easily propagated seal opening. At sealing temperatures above 160 °C, the adhesion may be up to 15 N/15mm. This allows for preparing strong seals at portions of the package that are not intended to be opened, while providing easy opening for portions of the package that are intended to be opened.

The delamination layer may comprise or consist essentially of an anhydride-modified polymer comprising a base polymer comprising a polyethylene homopolymer or copolymer, polypropylene homopolymer or copolymer, or an ethylene copolymer comprising copolymerized units derived from ethylene and at least one additional polar comonomer, preferably ethylene vinyl acetate copolymer, ethylene alkyl (meth)acrylate copolymer, wherein the base polymer is grafted with up to 1 weight % of an unsaturated dicarboxylic acid anhydride, preferably maleic anhydride; or an acid copolymer or ionomer thereof.

Modified polymers for use in the delamination layer may be modified with anhydride functionalities. Examples of the anhydrides used to modify polymers, which may be mono-, di- or polycarboxylic acids are itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, or combinations of two or more thereof, maleic anhydride being preferred.

When anhydride-modified polymer is used, it may contain from 0.03 to 1 weight %, of an anhydride, the weight percentage being based on the total weight of the modified polymer. These include polymers that have been grafted with from 0.1 to 1 weight % of an unsaturated dicarboxylic acid anhydride, preferably maleic anhydride. Generally, they will be grafted olefin polymers, for example grafted polyethylene, grafted EVA copolymers, grafted ethylene alkyl acrylate copolymers and grafted ethylene alkyl methacrylate copolymers, each grafted with from 0.1 to 1 weight % of an unsaturated dicarboxylic acid anhydride. Specific examples of suitable anhydride-modified polymers are disclosed in U.S. Patent Application Publication 2007/0172614.

A second component of a preferred delamination composition may be at least one ethylene polymer or copolymer compositionally distinct from the first anhydride-modified polymer component. "Chemically distinct" means that a) the ethylene copolymer of the second component of the composition comprises at least one species of copolymerized monomer that is not present as a comonomer in the functionalized polymer component or b) the functionalized polymer component comprises at least one species of copolymerized monomer or grafted moiety that is not present in the ethylene copolymer of the second component. Thus, the first and second polymers are different in chemical structure and are distinct polymer species.

Ethylene polymers or copolymers used as the second component of the delamination composition may be polyethylene homopolymers, copolymers of ethylene and alpha-olefins, including copolymers with propylene and other alpha-olefins. Ethylene polymers or copolymers suitable for use as the second component include high density polyethylenes, low density polyethylenes, very low density polyethylenes (VLDPE), linear low density polyethylenes, and copolymers of ethylene and alpha-olefin monomers prepared in the presence of metallocene catalysts, single site catalysts and constrained geometry catalysts (hereinafter referred to as metallocene polyethylenes, or MPE). Suitable ethylene copolymers and methods for their preparation are disclosed in U.S. Patent Application Publication 2007/0172614. The ethylene copolymer used as the second component of the adhesion composition may also comprise copolymerized units of ethylene and a polar comonomer such as vinyl acetate, alkyl acrylates, alkyl methacrylates and mixtures thereof. The alkyl groups will have from 1 to 10 carbon atoms. Additional comonomers may be incorporated as copolymerized units in the ethylene copolymer. Suitable copolymerizable monomers include carbon monoxide, methacrylic acid and acrylic acid. Ethylene alkyl acrylate carbon monoxide terpolymers are examples of such compositions, including ethylene n-butyl acrylate carbon monoxide terpolymers.

The ethylene copolymer of the second component may also be an ethylene alkyl acrylate or ethylene alkyl methacrylate copolymer. Alkyl acrylates and alkyl methacrylates may have alkyl groups of 1 to 10 carbon atoms, for example methyl, ethyl or butyl groups. The relative amount of the alkyl acrylate or alkyl methacrylate comonomer units in the copolymers can vary broadly from a few weight % to as much as 45 weight %, based on the weight of the copolymer. Mixtures of ethylene alkyl acrylate and/or alkyl methacrylate copolymers may also be used.

Blends of the anhydride-modified copolymer with at least one ethylene polymer or copolymer and at least one copolymer of ethylene copolymerized with at least one polar comonomer as described above are also contemplated.

The delamination layer may also comprise, or consists essentially of, or consist of, an acid copolymer or ionomer thereof.

The ethylene acid copolymer comprises one or more E/X/Y terpolymers where E represents copolymerized units of ethylene, X represents copolymerized units of at least one C₃-C₈ α,β-ethylenically unsaturated carboxylic acid, Y represents copolymerized units of a softening comonomer (softening means that the polymer is made less crystalline). Of note are E/X/Y copolymers wherein Y is 0 weight % of the copolymer; that is, E/X dipolymers.

Examples of X include acrylic acid or methacrylic acid and X can be from about 3 to 35, 4 to 25, or 5 to 20, weight % of the E/X/Y copolymer. Examples of Y include alkyl acrylate, alkyl methacrylate, or combinations thereof wherein the alkyl groups have from 1 to 8, or 1 to 4, carbon atoms. E/X/Y copolymers wherein Y is present in at least 1 weight %, or about 2 to about 35 weight % of the E/X/Y copolymer are notable. Ethylene can make up the rest of the E/X/Y terpolymer.

Specific terpolymers include ethylene/acrylic acid/n-butyl acrylate, ethylene/methacrylic acid/n-butyl methacrylate, ethylene/acrylic acid/iso-butyl acrylate, ethylene/methacrylic acid/iso-butyl methacrylate, ethylene/acrylic acid/methyl acrylate, ethylene/methacrylic acid/methyl methacrylate, ethylene/acrylic acid/ethyl acrylate and ethylene/methacrylic acid/ethyl methacrylate terpolymers, or combinations of two or more thereof.

The acid copolymers used herein are preferably "direct" or "random" acid copolymers. Direct or random copolymers are polymers polymerized by adding all monomers simultaneously, as distinct from a graft copolymer, where another monomer is grafted onto an existing polymer, often by a subsequent free radical reaction. Ethylene acid copolymers may be produced by any methods known to one skilled in the art such as use of "co-solvent technology" disclosed in U.S. Patent 5,028,674.

Ionomers are ionic copolymers of an olefin such as ethylene (E) with a metal salt of an unsaturated carboxylic acid, such as acrylic acid (AA), methacrylic acid (MAA), and/or other acids, and optionally softening comonomers such alkyl acrylates or alkyl methacrylates. At least one alkali metal, transition metal, or alkaline earth metal cation, such as lithium, sodium, potassium, magnesium, calcium, or zinc, or a combination of such cations, is used to neutralize some portion of the acidic groups in the copolymer resulting in a thermoplastic resin exhibiting enhanced properties. Preferred α,β-ethylenically unsaturated monocarboxylic acids include acrylic acid and methacrylic acid, present in the copolymer in about 1 weight % to about 25 weight %. Dipolymers preferably include from about 8 to about 20 weight % of α,β-ethylenically unsaturated monocarboxylic acid. For example, a dipolymer of ethylene and methacrylic acid can then be at least partially neutralized to salts comprising one or more alkali metal, transition metal, or alkaline earth metal cations to form an ionomer.

As indicated above, comonomers such as alkyl (meth)acrylates can be included in the ethylene acid copolymer to form a terpolymer that can be neutralized to provide carboxylate salts with alkali metal, alkaline earth metal or transition metal cations. Preferred are comonomers selected from alkyl acrylate and alkyl methacrylate wherein the alkyl groups have from 1 to 8 carbon atoms, and more preferred are comonomers selected from methyl acrylate, ethyl acrylate, *iso*-butyl acrylate (iBA), and *n*-butyl acrylate (nBA). The alkyl (meth)acrylates are optionally included in amounts from 0 to about 30 weight % alkyl (meth)acrylate such as from about 1 to about 30 weight % and preferably from about 5 to about 25 weight % of the copolymer when present.

Ionomers are obtained by neutralization of an acid copolymer. Neutralization of the ethylene acid copolymer can be effected by first making the ethylene acid copolymer and treating the copolymer with inorganic base(s) with alkali metal, alkaline earth metal or transition metal cation(s). The copolymer can be from about 1 to about 99 % neutralized to form salts with at least one metal ion selected from lithium, sodium, potassium, magnesium, calcium, barium, lead, tin, zinc, aluminum; or combinations of such cations. Neutralization may be from about 10 to about 70 %. Preferably the copolymer has from about 20 %, alternatively from about 35 %, to about 70 % of the available carboxylic acid groups ionized by neutralization with at least one metal ion selected from sodium, zinc, lithium, magnesium, and calcium; and more preferably zinc or sodium. Particularly notable is an ionomer comprising zinc cations.

The amount of basic metal compound capable of neutralizing acidic groups may be provided by adding the stoichiometric amount of the basic compound calculated to neutralize a target amount of acid moieties in the acid copolymer (herein referred to as "% nominal neutralization" or "nominally neutralized"). Thus, sufficient basic compound is made available in the blend so that, in aggregate, the indicated level of nominal neutralization could be achieved.

Metal compounds of note include formates, acetates, nitrates, carbonates, hydrogencarbonates, oxides, hydroxides or alkoxides of the ions of alkali metals, especially sodium and potassium, and formates, acetates, nitrates, oxides, hydroxides or alkoxides of the ions of alkaline earth metals and transition metals. Of note are sodium hydroxide, potassium hydroxide, sodium acetate, potassium acetate, sodium carbonate and potassium carbonate.

Unmodified ionomers are prepared from the acid copolymers such as those disclosed in U.S. Patent 3,264,272. "Unmodified" refers to ionomers that are not blended with any material that has an effect on the properties of the unblended ionomer, except the additives described below. Notably, ionomers used in the films of the invention comprise less than one weight % of C₆-C₃₆ monocarboxylic acids or salts thereof.

Ethylene acid copolymers are commercially available under the trademark NUCREL® and ionomers are commercially available under the trademark SURLYN®, both from DuPont.

A single ionomer may be present in the ionomeric composition, or the ionomeric composition may include two or more different ionomers, such as for example, ionomers with different cations, or ionomers with different polymeric structures, such as a blend of a dipolymeric ionomer and a terpolymeric ionomer.

The ionomeric composition(s) may consist essentially of the ionomers described above. Alternatively, the ionomer in the ionomer-containing layer(s) may be blended with less than 50 weight %, such as about 5 to about 25 weight % of a polyolefin or a second ethylene copolymer other than an ionomer as described below. Preferably, when the ionomer is blended with a polyolefin, the copolymer used in the ionomer contains from about 1 to about 15 weight % of copolymerized units of carboxylic acid comonomers.

When more than one ionomer-containing layer is present, the compositions of each ionomer-containing layer may be the same as, or different from, other ionomer-containing layer(s). For example, two different ionomer compositions may be used when at least two ionomer-containing layers are present in the multilayer structure, including two different ionomers, or an ionomer and an ionomer blended with a polyolefin.

When an ionomer is used as the delamination layer, it may be the same or different as an ionomer used in the sealant layer described below. In some cases, an ionomer composition may serve as both the delamination layer and the sealant layer.

### The Sealant Layer

The inside surface layer, or sealant layer, is the layer that provides the inside layer of a package prepared from the film and is closest to the packaged contents. It also provides a means for sealing or closing the package around the packaged product such as by heat sealing two portions of the sealant layer together or to the surface of another part of the package, such as sealing a lidding film to a thermoformed packaging component. The composition for the sealant layer is selected to influence the sealing capability of the inside surface layer, i.e., such that a high sealing bond strength may be achieved at the lowest possible sealing temperature.

The sealant layer may comprise one or more polymers capable of fusion bonding on another layer by conventional means of heat sealing. The sealant layer may comprise one or more polyolefin polymer comprising a polyethylene homopolymer or copolymer, ethylene alkyl (meth)acrylate copolymer, or an ethylene alkyl (meth)acrylic acid copolymer or ionomer thereof, or mixtures thereof.

Preferably, the one or more olefin homopolymers and/or copolymers are chosen among polyethylene, and/or copolymers, ethylene copolymers such as for example ethylene (meth)acrylic acid copolymers and their corresponding ionomers, and/or mixtures thereof.

The sealant layer may include at least one polyolefin, preferably polyethylene (PE) homopolymers or copolymers of ethylene and other α-olefins. Other α-olefins include propylene, 1-butene, 1-hexene, 4-methyl-1-pentene, 1-octene, 1-decene, 1-tetradecene, 1-octadecene, vinylacetate, alkyl (meth)acrylate or in combinations of two or more. It should be appreciated that the list of comonomers above is merely exemplary, and is not intended to be limiting. Various types of polyethylenes are known in the art. PE homopolymers and copolymers may be prepared by a variety of methods, for example, the well-known Ziegler-Natta catalyst polymerization (e.g., U.S. Patents 4,076,698 and 3,645,992), metallocene catalyzed polymerization, Versipol® catalyzed polymerization and by free radical polymerization. The polymerization may be conducted as solution phase processes, gas phase processes, and the like. Examples of PE polymers may include high density PE (HDPE), linear low density PE (LLDPE), low density PE (LDPE), very low or ultralow density PEs (VLDPE or ULDPE), lower density PE made with metallocene having high flexibility and low crystallinity (mPE).

The density of PE may range from about 0.865 g/cc to about 0.970 g/cc. Linear PE may incorporate α-olefin comonomers such as butene, hexene or octene to decrease density to within the density range so described. For example, a copolymer may comprise a major portion (by weight) of ethylene that is copolymerized with another α-olefin having 3 to 20 carbon atoms and up to about 20% by weight of the copolymer.

Low density polyethylene ("LDPE") can be prepared at high pressure using free radical initiators and typically has a density in the range of 0.916 to 0.940 g/cm³, preferably 0.924 to 0.940 g/cm³. LDPE is also known as "branched" or "heterogeneously branched" polyethylene because of the relatively large number of long chain branches extending from the main polymer backbone. Polyethylene in the same density range, 0.916 to 0.940 g/cm³, which is linear and does not contain large quantities of long chain branching is also known; this "linear low density polyethylene" ("LLDPE") can be produced with conventional Ziegler-Natta catalysts or with single site catalysts such as metallocene catalysts. Relatively higher density LDPE or LLDPE, typically in the range of 0.928 to 0.940 g/cm³ are sometimes referred to as medium density polyethylene ("MDPE") or Linear Medium Density Polyethylene (LMDPE). Polyethylenes having still greater density are the high density polyethylenes ("HDPEs"), i.e., polyethylenes having densities greater than 0.940 g/cm³, and are generally prepared with Ziegler-Natta catalysts, chrome catalysts or even single site catalysts such as metallocene catalysts. Very low density polyethylene ("VLDPE") is also known. VLDPEs can be produced by a number of different processes yielding polymers with different properties, but can be generally described as polyethylenes having a density less than 0.916 g/cm³, such as 0.890 to 0.915 g/cm³ or 0.900 to 0.915 g/cm³.

A "metallocene polyethylene" (mPE) as used herein means a polyethylene produced by a metallocene catalyst, defined to be at least one metallocene catalyst component containing one or more substituted or unsubstituted cyclopentadienyl moiety (Cp) in combination with a Group 4, 5, or 6 transition metal (M). The metallocene catalyst precursors generally require activation with a suitable co-catalyst, or activator, in order to yield an "active metallocene catalyst", i.e., an organometallic complex with a vacant coordination site that can coordinate, insert, and polymerize olefins. Non-limiting examples of metallocene catalysts and catalyst systems useful in preparing metallocene polyethylenes include WO96/11961; WO96/11960 and WO01/98409; U.S. Patents 4,808,561; 5,017,714; 5,055,438; 5,064,802; 5,124,418; 5,153,157; 5,240,894; 5,272,236; 5,264,405; 5,278,272; 5,324,800; 5,507,475, 6,380,122; and 6,376,410; and references cited therein. Of note are metallocene polyethylenes comprising ethylene/octene copolymers or ethylene/hexene copolymers.

The PE copolymer may also be an ethylene propylene elastomer containing a small amount of unsaturated compounds having a double bond. Ethylene copolymers having small amounts of a diolefin component such as butadiene, norbornadiene, hexadiene and isoprene are also generally suitable. Terpolymers such as ethylene/propylene/diene monomer (EPDM) are also suitable.

Blends of two or more of any of the polyethylene are also contemplated for use in this invention. For example, blends of LLDPE and LDPE or blends of LDPE and HDPE or blends of LDPE and mPE may be used in at least one layer of the multilayer film, such as the sealant layer.

As used herein, the terms "polyethylene" and "PE" are used generically to refer to any or all of the non-ionomeric polymers comprising ethylene described above, including any of the above-described materials and blends.

The sealant layer may also comprise ethylene (meth)acrylate copolymers as described above.

The sealant layer may also comprise a mixture of at least one of a polyethylene polymer, ethylene alkyl (meth)acrylate copolymer, ethylene (meth)acrylate copolymer or ionomer thereof, and at least one polybutylene polymer.

For example, the composition of the sealant layer comprises from 90 to 98 weight % of the at least one ethylene polymer, ethylene alkyl (meth)acrylate copolymer, ethylene (meth)acrylate copolymer or ionomer thereof, and from 2 to 10 weight % of the at least one polybutylene polymer, the weight percent being based on the total weight of the sealant layer composition.

Inclusion of polybutylene in the sealant layer may facilitate cohesive failure of the sealant layer when pulled apart to open the package. Useful in these embodiments are the peel systems disclosed in U.S. Patent 4,189,519 (blend of EVA or EMA or EEA with crystalline isotactic polybutylene, and optionally with anhydride grafted EVA); U.S. Patent 4,252,846 (blend of EVA and HDPE, optionally with IO or polybutylene (PBU)); U.S. Patent 4,550,141 (blend of IO and polypropylene/ethylene copolymer (EPC)); U.S. Patent 4,666,778 (three component blend of PE, that can be LLDPE, LDPE, MDPE, or HDPE, or EVA or EMA, with PBU, and PP or EPC); U.S. Patent 4,882,229 (butene-1 polymer or copolymer blended with modified or unmodified LDPE); U.S. Patent 4,916,190 (blend of butylene polymer or copolymer, with PE polymer or copolymer (LLDPE, LDPE, MDPE, EVA, EMA, EEA, EBA, or HDPE), with propylene polymer or copolymer); U.S. Patent 4,937,139 (propylene polymer or copolymer blended with HDPE); U.S. Patent 5,547,752 (blend of PBU and IO); and U.S. Patent 5,997,968 (blend of a copolymer of ethylene and propylene or ethylene and butylene or propylene and butylene or ethylene and another -olefin having 5 to 10 carbon atoms or propylene and another -olefin having 5 to 10 carbon atoms or a terpolymer of ethylene and propylene and butylene or ethylene and propylene and another -olefin having 5 to 10 carbon atoms and HDPE, MDPE, LDPE, LLDPE or VLDPE.

In some embodiments, the delamination layer may comprise an ionomer and the sealant layer may comprise polyethylene. In such embodiments, an adhesion layer may be necessary between the delamination layer and the sealant layer to provide sufficient interlayer adhesion.

Alternatively, the sealant layer comprises at least ethylene acid copolymer or ionomer thereof, such as described above. When the sealant layer and the delamination layer are both ionomers, there is no need for an adhesion layer between the delamination layer and the sealant layer. Notably, in some structures, a single layer of ionomer may serve as both delamination layer and the sealant layer.

### Adhesion Layers

In addition, the coextruded multilayer structure may comprise one or more additional layers to serve as adhesion layers between functional layers to improve interlayer adhesion and prevent delamination of the layers. For example, such coextruded adhesion layers may be positioned between the external layer (PET) composition and the gas barrier layer composition, and/or between ionomer-containing layers and polyolefin layers. For example, adhesion compositions described in U.S. Patents 6,545,091, 5,217,812, 5,053,457, 6,166,142, 6,210,765 and U.S. Patent Application Publication 2007/0172614 are useful in this invention.

A preferred adhesion composition useful in the multilayer film is a multicomponent composition comprising 1) a functionalized polymer, 2) an ethylene polymer or copolymer, and optionally 3) a tackifier.

The functionalized polymers useful as component 1) of the preferred multicomponent adhesion composition comprise anhydride- or epoxide-modified polymers or copolymers comprising copolymerized units of ethylene and a cyclic anhydride or monoester of C₄-C₈ unsaturated acids having at least two carboxylic acid groups or an epoxide-containing moiety. The ethylene polymers or copolymers useful as component 2) of the adhesion composition comprise at least one ethylene polymer or copolymer, chemically distinct from the functionalized polymer; that is the component 1) polymer composition. "Chemically distinct" means that a) the ethylene copolymer of the second component of the adhesion comprises at least one species of copolymerized monomer that is not present as a comonomer in the functionalized polymer component or b) the functionalized polymer component of the adhesion comprises at least one species of copolymerized monomer or grafted moiety that is not present in the ethylene copolymer of the second component of the adhesion. Thus, the first and second polymers are different in chemical structure and are distinct polymer species.

The functionalized polymer may be a modified copolymer, meaning that the copolymer is grafted and/or copolymerized with organic functionalities such as with anhydride and/or epoxide functionalities. Examples of anhydrides used to modify polymers are maleic acid, maleic acid monoethylester, itaconic anhydride, maleic anhydride and substituted maleic anhydride, maleic anhydride being preferred.

When anhydride-modified polymer is used, it may contain from 0.03 to 10 weight %, 0.05 to 5 weight %, or 0.05 to 3 % of an anhydride, the weight percentage being based on the total weight of the modified polymer. These include polymers that have been grafted with from 0.1 to 10 weight % of an unsaturated dicarboxylic acid anhydride, preferably maleic anhydride. Generally, they will be grafted olefin polymers, for example grafted polyethylene, grafted EVA copolymers, grafted ethylene alkyl acrylate copolymers and grafted ethylene alkyl methacrylate copolymers, each grafted with from 0.1 to 10 weight % of an unsaturated dicarboxylic acid anhydride. Specific examples of suitable anhydride-modified polymers are disclosed in U.S. Patent Application Publication 2007/0172614.

The functionalized polymer may also be an ethylene copolymer comprising copolymerized units of ethylene and a comonomer selected from the group consisting of C₄-C₈ unsaturated anhydrides, monoesters of C₄-C₈ unsaturated acids having at least two carboxylic acid groups, diesters of C₄-C₈ unsaturated acids having at least two carboxylic acid groups and mixtures of such copolymers. The ethylene copolymer may comprise from about 3 to about 25 weight % of copolymerized units of the comonomer. The copolymer may be a dipolymer or a higher order copolymer, such as a terpolymer or tetrapolymer. The copolymers are preferably random copolymers. Examples of suitable comonomers of the ethylene copolymer include unsaturated anhydrides such as maleic anhydride and itaconic anhydride; or C₁-C₂₀ alkyl monoesters of butenedioic acids (e.g. maleic acid, fumaric acid, itaconic acid and citraconic acid), including methyl hydrogen maleate, ethyl hydrogen maleate, or propyl hydrogen fumarate. These functionalized polymer components of the adhesion composition are ethylene copolymers obtained by a process of high-pressure free radical random copolymerization, rather than graft copolymers. The monomer units are incorporated into the polymer backbone or chain and are not incorporated to an appreciable extent as pendant groups onto a previously formed polymer backbone.

Examples of epoxides used to modify polymers are unsaturated epoxides comprising from four to eleven carbon atoms, such as glycidyl (meth)acrylate, allyl glycidyl ether, vinyl glycidyl ether and glycidyl itaconate, glycidyl (meth)acrylates being particularly preferred. Epoxide-modified ethylene copolymers preferably contain from 0.03 to 15 weight %, 0.03 to 10 weight %, 0.05 to 5 weight %, or 0.05 to 3 % of an epoxide, the weight percentage being based on the total weight of the modified ethylene copolymer. Preferably, epoxides used to modify ethylene copolymers are glycidyl (meth)acrylates. The ethylene/glycidyl (meth)acrylate copolymer may further contain copolymerized units of an alkyl (meth)acrylate having from one to six carbon atoms Representative alkyl (meth)acrylates include methyl (meth)acrylate, ethyl (meth)acrylate, propyl (meth)acrylate, butyl (meth)acrylate, isobutyl (meth)acrylate, hexyl (meth)acrylate, or combinations of two or more thereof. Of note are ethyl acrylate and butyl acrylate. Preferably, modified ethylene copolymers comprised in the tie layer are modified with acid, anhydride and/or glycidyl (meth)acrylate functionalities.

The second component of the preferred adhesion composition is at least one ethylene polymer or copolymer compositionally distinct from the first functionalized polymer component, including the polyolefins or ethylene copolymers with polar comonomers described above.

The adhesion composition may also include a tackifier. The tackifier may be any suitable tackifier known generally in the art. For example, the tackifier may include types listed in U.S. Patent 3,484,405. Suitable tackifiers include a variety of natural and synthetic resins and rosin materials. Tackifier resins that can be employed are liquid, semi-solid to solid, complex amorphous materials generally in the form of mixtures of organic compounds having no definite melting point and no tendency to crystallize.

Compositions comprising olefin polymers and modified polymers thereof are commercially available under the trademarks APPEEL®, BYNEL®, ELVALOY® AC, and ELVAX® from DuPont.

The thickness of each adhesion layer of the multilayer structure may be independently between 1 and 100 µm, 5 and 50 µm, or 5 to 30 µm.

The various layer compositions of the coextruded multilayer film structure may further comprise modifiers and other additives, including without limitation, plasticizers, impact modifiers, stabilizers including viscosity stabilizers and hydrolytic stabilizers, lubricants, antioxidants, UV light stabilizers, antifog agents, antistatic agents, dyes, pigments or other coloring agents, fillers, flame retardant agents, reinforcing agents, foaming and blowing agents and processing aids known in the polymer compounding art like for example antiblock agents and release agents.

These additives may be present in each layer composition independently in amounts of up to 20 weight %, preferably from 0.01 to 7 weight %, and more preferably from 0.01 to 5 weight %, the weight percentage being based on the total weight of the composition.

Representative examples of multilayer films include those described below. In the multilayer film structures the symbol "/" represents a boundary between layers. In these structures, outside to inside layers of the multilayer structure as intended to be used in a package are listed in order from left to right. "PET" represents polyethylene terephthalate, "PA" represents a polyamide, and "Del" represents a delamination layer as described herein. Where an adhesion layer is present, that layer is designated as "tie." Tie layer compositions in a structure may be the same or different, depending on the compositions of adjacent layers. For adjacent layers each containing ionomers, the compositions are different from each other. The structures below are not meant to be an exhaustive list of the structures of the invention and are for purposes of example. Those skilled in the art will recognize that other film structures will fall within the scope of the invention. Such structures may include one or more adhesion layers, comprising any adhesion composition, including the above-described preferred adhesion compositions. Each embodiment will have particular advantages depending on the particular packaging application.

| | |
|---|---|
| PET/Tie/PP/ionomer/PA/EVOH/PA/Del/PE | PET/Tie/PE/ionomer/PA/EVOH/PA/Del/PE |
| PET/Tie/EVA/ionomer/PA/EVOH/PA/Del/PE | PET/Tie/EMA/ionomer/PA/EVOH/PA/Del/PE |
| PET/Tie/PP/PA/EVOH/PA/Del/PO/PE | PET/Tie/PE/PA/EVOH/PA/Del/PO/PE |
| PET /Tie/ionomer/PA/EVOH/PA/Del/PO/PE | PET/Tie/EVA/Tie/PA/EVOH/PA/Del/PO/PE |
| PET/Tie/EMA/Tie/PA/EVOH/PA/Del/PO/PE | PA/Tie/PP/ionomer/PA/EVOH/PA/Del/PE |
| PA/Tie/PE/ionomer/PA/EVOH/PA/Del/PE | PA/Tie/EVA/ionomer/PA/EVOH/PA/Del/PE |
| PA/Tie/EMA/ionomer/PA/EVOH/PA/Del/PE | PA/Tie/PP/PA/EVOH/PA/Del/PO/PE |
| PA/Tie/PE/PA/EVOH/PA/Del/PO/PE | PA/Tie/ionomer/PA/EVOH/PA/Del/PO/PE |
| PA/Tie/EVA/Tie/PA/EVOH/PA/Del/PO/PE | PA/Tie/EMA/Tie/PA/EVOH/PA/Del/PO/PE |
| PET/Tie/PP/ionomer/PA/EVOH/PA/Del/ionomer | PET/Tie/PE/ionomer/PA/EVOH/PA/Del/ionomer |
| PET/Tie/EVA/ionomer/PA/EVOH/PA/Del/ionomer | PET/Tie/EMA/ionomer/PA/EVOH/PA/Del/ionomer |
| PET/Tie/PP/PA/EVOH/PA/Del/PO/ionomer | PET/Tie/PE/PA/EVOH/PA/Del/PO/ionomer |
| PET/Tie/ionomer/PA/EVOH/PA/Del/PO/ionomer | PET/Tie/EVA/Tie/PA/EVOH/PA/Del/PO/ionomer |
| PET/Tie/EMA/Tie/PA/EVOH/PA/Del/PO/ionomer | PA/Tie/PP/ionomer/PA/EVOH/PA/Del/ionomer |
| PA/Tie/PE/ionomer/PA/EVOH/PA/Del/ionomer | PA/Tie/EVA/ionomer/PA/EVOH/PA/Del/ionomer |
| PA/Tie/EMA/ionomer/PA/EVOH/PA/Del/ionomer | PA/Tie/PP/PA/EVOH/PA/Del/PO/ionomer |
| PA/Tie/PE/PA/EVOH/PA/Del/PO/ionomer | PA/Tie/ionomer/PA/EVOH/PA/Del/PO/ionomer |
| PA/Tie/EVA/Tie/PA/EVOH/PA/Del/PO/ionomer | PA/Tie/EMA/Tie/PA/EVOH/PA/Del/PO/ionomer |

The coextruded multilayer film structure for invention may be manufactured in a triple bubble (3B) process, comprising the steps of coextruding a tubular multilayer film structure comprising at least one layer of sealant composition, at least one barrier layer (polyamide and/or EVOH) and one structural layer (polyester) layer and adhesive layers, cooling the coextruded tubular multilayer film structure in a first bubble, mono- or bi-axially orienting the coextruded tubular multilayer film structure under heating in a second bubble, and thermofixing the mono- or bi-axially oriented coextruded tubular multilayer film structure under heating in a third bubble. An exemplary description of a triple bubble (3B) process is provided for example in WO2007/099214.

Prior laminated burst peel structures have been prepared by laminating a bi-axially oriented structural film to a second film containing the delamination layer and the sealant layer using non-extrudable adhesives. The triple bubble process allows formation and orientation of the film of the multilayer film structure in a single continuous operation, resulting in a more economical manufacturing process.

The step of coextruding a tubular multilayer film structure as described herein may be carried out by connecting multiple extruders separately processing the corresponding layer materials, generally in the form of granulates or pellets, to a circular or annular die to form a tubular multilayer film structure.

Referring to Figure 1, the polymer compositions making up each of the different layers in the tubular multilayer film structure of this invention can be fed into an extruder assembly E by methods known in the art such as to form the corresponding layers in the tubular multilayer film structure upon passing through the circular die D. The extruder assembly E may comprise multiple extruders, one for each composition in the multilayer structure and feedblocks to provide the appropriate polymer flow for each of the layers.

The first bubble B1 of the triple bubble process is formed on one end by the tubular multilayer film having a diameter of D1 exiting the die, and on the other end by the set of rolls R1 that form the hermetically closed end of the first bubble B1.

In the first bubble B1, the tubular multilayer film structure exiting the die and having an initial diameter D1 is quickly cooled (quenched) in a way such as to obtain a minimum amount of crystallization in the structure.

Said quick cooling is preferably obtained by quenching the exiting coextruded tubular multilayer film structure in a first water bath W1 having a temperature of from 0.1°C to 50°C, more preferably of from 0.1°C to 25°C and a length of from 0.4 to 5 m, preferably of from 1 to 3m. The water bath W1 is preferably a circular water bath into which the bubble is extruded and quenching may also involve spraying water onto the surface of the bubble. The residence time in the water bath W1 may be adjusted to range of from 1 to 20 seconds.

After passing through the set of rolls R1, the coextruded tubular multilayer structure is subsequently passed through a set of nip rolls R2 that form the upstream (towards the extruder) end of a second bubble B2. At the upstream end of the second bubble B2 heating is applied, and the bubble is inflated, or opened, to form the second bubble B2 in which the coextruded tubular multilayer film structure is mono- or bi-axially oriented.

The heating is applied by passing the film through a heating water bath W2 and/or a heat source H1, positioned at the upstream end of the second bubble B2 where the previously flattened coextruded tubular multilayer exits the set of nip rolls R2 and where the coextruded tubular multilayer structure is inflated to form the second bubble B2 using pressure P1.

The heat source H1 may be any kind of suitable heat source and is preferably chosen among infrared heat sources, steam, hot air heat sources or any combination thereof. Because steam may leave residual humidity on the second bubble surface and the air heat source might disturb the bubble by their airflow, the heat source is preferably an infrared heat source.

The water bath and/or heat source H1 is adjusted such as to heat the tubular coextruded multilayer film structure to a temperature above the glass transition temperature of the multilayer film structure layer having the highest glass transition temperature, more preferably to a temperature between 60°C to 95°C.

In the second bubble B2, inflating allows for the tubular multilayer film structure to be drawn, or oriented, in both machine/axial direction (MD) and transverse/radial direction (TD) at the same time to yield a bi-axially oriented tubular multilayer film.

The drawing in the machine/axial direction (MD) can be achieved by adjusting the speed V2 of a second set of nip rolls R2 that form the upstream (towards the extruder) end of the second bubble and the speed V3 of a third set of nip rolls R3 that form the downstream (away from extruder) end of the second bubble. Generally, V3 is greater than V2, preferably 2 to 4 times greater than V2. Stated alternatively, the ratio given by V3/V2 is equivalent to the MD drawing ratio and is preferably of from 2 to 4.

The drawing in the transverse/radial direction (TD) can be achieved by adjusting the pressure P1 within the second bubble B2. To adjust the pressure P1, the distance L1 between a first set of nip rolls R2 that form the hermetically closed upstream (towards the extruder) end of the second bubble B2, and a second set of nip rolls R3 that form the hermetically closed downstream (away from extruder) end of the second bubble B2 can be adjusted. Reducing the distance L1 between the two sets of nip rolls (R2,R3) will increase the pressure P1, whereas increasing the distance L1 will lower the pressure P1 within the second bubble. After the drawing in the transverse/radial direction (TD), the initial diameter D1 of the softened tubular multilayer film can be increased to a diameter D2, wherein the TD drawing ratio given by D2/D1 is from 2 to 5, preferably from 2.5 to 3.5.

The biaxially oriented, tubular coextruded multilayer film structure is cooled by air surrounding the bubble before passing through the third set of nip rolls R3,where the tubular coextruded multilayer film structure is flattened to be more easily conveyed. After passing through the set of rolls R3, the tubular coextruded multilayer film structure is passed through a fourth set of nip rolls R4 that form the hermetically closed upstream (towards the extruder) end of the third bubble B3, and a fifth set of nip rolls R5 that form the hermetically closed downstream (away from extruder) end of the third bubble B3.

The fourth and fifth set of nip rolls (R4,R5) are separated by a distance L2 that can be adjusted to increase or decrease the pressure P2 within the third bubble B3 in order to allow the previously drawn tubular coextruded multilayer film structure to relax in transverse/radial direction (TD).

Generally, this can be achieved by adjusting the pressure P2 in the third bubble B3 such that the pressure P2 is lesser than the pressure P1. The pressure is adjusted by modifying the distance L2 between the fourth and the fifth set of nip rolls (R4,R5) of the third bubble B3. The lesser pressure P2 will allow the tubular multilayer film to relax to a diameter D3. The relaxation ratio is given by the ratio of D3/D2, wherein D3 is usually lesser than D2 and consequently the ratio of D3/D2 is smaller than 1. Typically the ratio of D3/D2 can be from 0.8 and 0.95, more preferably from 0.85 to 0.9.

The speed V4 of the fourth set of nip rolls R4 and the speed V5 of the fifth set of nip rolls may be adjusted in order to allow the previously drawn tubular coextruded multilayer film structure to relax in machine/axial direction (MD).

Generally, this can be achieved by adjusting the speed V5 of the fifth set of nip rolls R5 such that V5 is lesser than V4. The relaxation ratio is given by V5/V4, whereas V5 is usually lesser than V4 and concurrently the ratio of V5/V4 is smaller than 1. Typically the ratio of V5/V4 can be of from 0.8 to 0.95, more preferably of from 0.85 to 0.9.

The temperature of the tubular multilayer film structure in the third bubble can be adjusted by a heating device H2, such as for example an IR heater or heated air heater, hot water or steam, and can be chosen depending on the materials present in the tubular coextruded multilayer film structure. The heating device is preferably positioned either at the upstream end of the third bubble B3 or along the length thereof.

Generally, the temperature of the tubular multilayer film structure in the third bubble B3 can be from the glass transition point of the layer having the lowest glass transition point in the tubular multilayer film structure to the melting point of the highest melting material of the tubular multilayer film structure provided that the temperature of the tubular multilayer film structure in the third bubble is higher than the one of the tubular multilayer film structure in the second bubble. A typical temperature in the third bubble is around 60 to 100 °C if shrinkable films should be obtained, and up to 120-190°C if shrinkage should be eliminated.

The temperature of the tubular multilayer film structure in the third bubble, the pressure P2 and the ratio of V5/V4 may be adjusted individually or in parallel to achieve a tubular coextruded multilayer film structure exhibiting a shrink performance of less than 10 percent or of from 1 to 10 percent, more preferably of less than 5 percent or from 1 to 5 percent, when measured after exposure to a temperature of 120°C for 10 seconds in dry hot air, using a sample of 10 x 10 cm, in machine/axial direction (MD) and/or transverse/radial direction (TD). A shrink performance of 10% in machine/axial direction (MD) and/or transverse/radial direction (TD) means that the sample has shrunk to 90% of its original dimensions in machine/axial direction (MD) and/or transverse/radial direction (TD).

Alternatively, the temperature of the tubular multilayer film structure in the third bubble, the pressure P2 and the ratio of V5/V4 may be adjusted individually or in parallel to achieve a tubular coextruded multilayer film structure exhibiting a shrink performance of more than 30 percent or from 30 to 60 percent, more preferably from 30 to 50 percent, when measured after exposure to a temperature of 90°C for 10 seconds in a hot water bath, using a sample of 10 x 10 cm, in machine/axial direction (MD) and/or transverse/radial direction (TD). A shrink performance of 50% in machine/axial direction (MD) and/or transverse/radial direction (TD) means that the sample has shrunk to 50% of its original dimensions in machine/axial direction (MD) and/or transverse/radial direction (TD).

Immediately before being flattened by passing through the fifth set of nip rolls R5, the tubular multilayer film in the third bubble may be optionally cooled by blown air, and can subsequently stored on a roll S.

Optionally, the tubular coextruded multilayer film exiting the fifth set of nip rolls R5 can be slit on one side by a slitting knife K to yield a planar coextruded multilayer film structure that can be stored on a roll S.

The food casing or food film described herein may be used as food packaging having the form of a shrink bag, sealable film, lidding film, wrapping film, or the like.

Pouches are prepared from the film from either the tubular film structure or from the slit film. In general, pouches can be perepared from the film by a combination of folding, overlaying, cutting and sealing the film into the appropriate pouch design. For example, a pouch is prepared from the film by overlaying a portion of the film with a second portion of the film so that the sealant layers are in contact, heating a portion of the overlaying film layers with sufficient heat, pressure and time to provide a perimeter seal with an initiation peel force greater than 15 N/15mm, and cutting the film to provide a pouch with a portion of the perimeter sealed and leaving a portion of the perimeter unsealed to provide an opening to the interior of the pouch.

The pouch may optionally comprise a gusseted or fin seal, particularly when prepared from a non-tubular film structure.

After preparing the open-ended pouch, the pouch may be filled and closed by placing a product into the interior of the pouch through the opening and heat sealing the opening using heat, pressure and time selected so that the opening is sealed with a seal strength characterized by an initiation peel force less than about 13 N/15mm and a peel propagation force less than about 60% of the initiation force.

In some instances, the steps of preparing the pouch, placing the product inside the pouch and sealing the pouch may be conducted in a continuous, simultaneous operation using a form-fill-and-seal machine as known in the art.

### EXAMPLES

Without further elaboration, it is believed that one skilled in the art using the preceding description can utilize this invention to its fullest extent. The following Examples are, therefore, to be construed as merely illustrative, and not limiting of the disclosure in any way whatsoever.

### Materials Used

PET1: polyethylene terephthalate available commercially as Lighter™ C39 from Equipolymers.
PA1: a blend of 80 weight % of nylon 6 with melting point of 191-201 C and relative viscosity of 3.99 to 4.17 cP (96% H2SO4) available commercially as Ultramid B40F from BASF and 20 weight % of nylon 6I/6T available commercially from DuPont under the tradename Selar® PA 3426.
EVOH: ethylene vinyl alcohol available commercially as Soarnol™ DT2904 obtained from Nippon Goshei.
PE: a polyethylene copolymer with density of 0.902 g/cm³, MI of 1 g/10 min, m.p. of 99 °C and Vicat softening point of 86 °C, available commercially as Affinity™ 1880G from Dow Chemical Company.
LDPE: A low density polyethylene with density of 0.923 g/cm³, melting point of 111°C and MI of 0.75 g/10 minutes, commercially available under the designation LDPE 2420F from Saudi Basic Industries (SABIC) Europe.
mPE: metallocene catalyzed ethylene-hexene copolymer commercially available under the designation Exceed™ 2018 from ExxonMobil Chemicals.
Tie-1: is a maleic anhydride grafted, elastomer-based adhesive commercially available under the designation Admer® SF730E from Mitsui Chemicals.
Tie-2: a blend adhesive composition comprising an ethylene methacrylate copolymer, very low density polyethylene and anhydride modified ethylene alkyl acrylate copolymers with density of 0.93 g/cm³, MI of 1.6 g/10 min, m.p. of 92 °C, available commercially as BYNEL® 21E787 from DuPont.
Sealant: a blend of 80 weight % of LDPE and 20 weight % of mPE.

Melt Index (MI), the mass rate of flow of a polymer through a specified capillary under controlled conditions of temperature and pressure, was determined and/or reported according to ASTM 1238 at 190°C using a 2160 g weight, in g/10 minutes.

Coextruded multilayer films were produced on a triple bubble (3B) manufacturing line from Kuhne Anlagenbau GmbH, Germany using the materials summarized in Table 1 and the conditions described below. In Table 1, Layer 1 is the outside surface layer of the tubular bubble, layer 11 is the inside surface layer of the bubble and layers 2-10 are interior layers. When the same material comprises contiguous layers of the structure in Table 1, such as layers 3and 4 in the film, they will appear to be a single layer in the final film structure. The outside layer of the bubble will be the outside layer (farthest from the packaged goods) of the packaging film and the inside layer will be the inside layer (nearest the packaged goods).

An Example of a film that can be made with the above process is summarized in Table 1 (Example 1). The film comprises an external layer of polyester and gas barrier triplet layers, PA/EVOH/PA. PO layers outside and inside of the gas barrier layer are useful for protecting the EVOH layer from moisture, which can reduce its oxygen barrier performance. Layers 2 and 5 are adhesion layers. Layer 9 is the delamination layer that delaminates from the PA layer 8 when peeled.

The extruder containing the polyester was run at 280 °C, the extruder containing PA was run at 260 °C melt temperature, the extruders containing EVOH, polyolefins (PO) and the tie layers were run at 220-230 °C melt temperature.

**Table 1**

| Example | 1 | |
|---|---|---|
| Layer | Composition | Thickness (µm) |
| 1 | PET | 4.5 |
| 2 | Tie-1 | 3 |
| 3 | PO | 23 |
| 4 | PO | 3 |
| 5 | Tie-2 | 3 |
| 6 | PA | 4.5 |
| 7 | EVOH | 4.5 |
| 8 | PA | 4.5 |
| 9 | Tie-2 | 4.5 |
| 10 | PO | 2 |
| 11 | Sealant | 9 |
| total | | 65.5 |

Peel testing using a 180 degree peel test showed that the adhesion between the delamination layer and the polyamide layer was about 2 N/15mm after film preparation.

The film's heat seal properties were tested. The film was sealed to itself at various temperatures in a Kopp sealing equipment for 1 second and 0.4MPa Pressure. Table 2 summarizes the initiation peel force as well as the continuation peel force due to delamination-propagation for the various heat seal temperatures. Delamination appeared between the Tie-2 layer and the PA layer towards the inside of the package.

**Table 2**

| Value after sealing at (°C) | 100 | 120 | 140 | 160 | 180 | 200 |
|---|---|---|---|---|---|---|
| F max (initiation) (N/15mm) | 3.6 | 11.7 | 12.5 | 11.6 | 15.1 | 18.6 |
| F of delamination-propagation (N/15mm) | 1.6 | 6.7 | 6.7 | 8.3 | 12 | 13.7 |
| propagation/initiation force (%) | 44 | 57 | 54 | 72 | 79 | 74 |

It can be clearly seen from the data in Table 2 that at all sealing temperatures the opening of the seal is initiated by a strong initiation seal strength followed by a lower propagation seal strength, typical for burst peel behavior. For sealing temperatures below 160 °C, the initiation peel force was less than 13 N/15mm and the peel propagation force was less than 60% of the initiation force. These properties provide a robust, yet easily propagated seal opening for packaging. At sealing temperatures above 160 °C, the initiation peel force was greater than 15 N/15mm, and the peel propagation force was greater than 70% of the initiation force. This allows for good seal performance for the perimeter seals of a flexible package such as a pouch. This temperature-dependent performance of the delamination layer composition characterized by high seal strength when sealed at high sealing temperatures and very good burst peel performance when sealed at low temperatures allows for good design options for flexible packaging structures.

Embodiments of the invention include the following.
1. A coextruded biaxially oriented food packaging film comprising the following layer structure positioned in order from the outside to the inside:
   an outside surface layer comprising polyester, polyamide, polystyrene, polycarbonate, poly(methyl methacrylate), cyclic olefin copolymer, polypropylene, high density polyethylene, or combinations thereof, preferably polyester such as polyethylene terephthalate;
   a polyamide layer in direct contact with the delamination layer;
   a delamination layer in direct contact with the polyamide layer comprising an anhydride-modified polymer comprising a base polymer comprising a polyethylene homopolymer or copolymer, polypropylene homopolymer or copolymer, or an ethylene copolymer comprising copolymerized units derived from ethylene and at least one additional polar comonomer, preferably ethylene vinyl acetate copolymer, ethylene alkyl (meth)acrylate copolymer, wherein the base polymer is grafted with up to 1 weight % of an unsaturated dicarboxylic acid anhydride, preferably maleic anhydride; or an acid copolymer or ionomer thereof; wherein the adhesion between the polyamide layer and the delamination layer is from 0.1 to 10 N/15mm, preferably from 2 to 8 N/15mm; and
   an inside surface sealant layer comprising a polyolefin polymer comprising a polyethylene homopolymer or copolymer, ethylene alkyl (meth)acrylate copolymer, or an ethylene alkyl (meth)acrylic acid copolymer or ionomer thereof, or mixtures thereof.
2. The coextruded multilayer film according to embodiment 1 prepared by a triple bubble process.
3. The coextruded multilayer film according to embodiment 1 or 2, wherein the composition of the sealant layer comprises a mixture of at least one of a polyethylene polymer, ethylene alkyl (meth)acrylate copolymer, ethylene (meth)acrylate copolymer or ionomer thereof, and at least one polybutylene polymer.
4. The coextruded multilayer film structure according to embodiment 1, 2 or 3, wherein the composition of the sealant layer comprises from 90 to 98 weight percent of the at least one ethylene polymer, ethylene alkyl (meth)acrylate copolymer, ethylene (meth)acrylate copolymer or ionomer thereof, and from 2 to 10 weight percent of the at least one polybutylene polymer, the weight percent being based on the total weight of the sealant layer composition.
5. The film of embodiment 1, 2, 3 or 4 further comprising at least one additional layer, including a gas barrier layer, adhesion layer other than the delamination layer or combinations thereof.
6. The film of embodiment 5 wherein the gas barrier layer comprises ethylene vinyl alcohol copolymer, cyclic olefin copolymers, polyvinyl acetate, or blends thereof with polyethylene, polyvinyl alcohol, or polyamide.
7. The film of embodiment 1, 2, 3, 4, 5 or 6 wherein the external layer comprises polyethylene therephthalate.
8. A pouch or flexible container prepared from the film of any of embodiments 1 through 7, wherein one portion of the film is overlaid with a second portion of the film so that a portion of the inside surface sealant layer is in contact with a second portion of the inside surface sealant layer, and a portion of the perimeter of the pouch is heat sealed with an initiation peel force greater than 15 N/15mm, leaving a portion of the perimeter unsealed to provide an opening to the interior of the pouch.
9. The pouch of embodiment 8 containing a gusseted or fin seal.
10. The pouch of embodiment 8 or 9, containing a product in the interior of the pouch, wherein the opening is heat sealed with a seal strength characterized by an initiation peel force less than about 13 N/15mm and a peel propagation force less than about 60% of the initiation force.
11. The pouch of embodiment 10 wherein the product comprises dry goods.
12. The pouch of embodiment 11 wherein the product comprises an edible good such as potato chips, cookies, candy, breakfast cereal, dried vegetables, rice, coffee beans or ground coffee, nuts, or dairy powders.
13. The pouch of any of embodiments 8 through 12 exhibiting shrinkage of greater than 2% and less than 70% and exhibit secondary sealing behavior.
14. A method for preparing the film of any of embodiments 1 through 7, comprising the steps of coextruding a tubular multilayer film structure, cooling the coextruded tubular multilayer film structure in a first bubble, mono- or bi-axially orienting the coextruded tubular multilayer film structure under heating in a second bubble, and thermofixing the bi-axially oriented coextruded tubular multilayer film structure under heating in a third bubble.
15. The method of embodiment 14 further comprising preparing a pouch by overlaying a portion of the film with a second portion of the film so that the sealant layers are in contact, heating a portion of the overlaying film layers with sufficient heat, pressure and time to provide a perimeter seal with an initiation peel force greater than 15 N/15mm, and cutting the film to provide a pouch with a portion of the perimeter sealed and leaving a portion of the perimeter unsealed to provide an opening to the interior of the pouch.
16. The method of embodiment 15 further comprising placing a product into the interior of the pouch through the opening and heat sealing the opening using heat, pressure and time selected so that the opening is sealed with a seal strength characterized by an initiation peel force less than about 13 N/15mm and a peel propagation force less than about 60% of the initiation force.
17. The method of embodiment 16 wherein the product comprises dry goods.
18. The method of embodiment 17 wherein the product comprises edible goods such as potato chips, cookies, candy, breakfast cereals, dried vegetables, rice, coffee beans or ground coffee, nuts, or dairy powders.

## Claims

1. A coextruded biaxially oriented food packaging film comprising the following layer structure positioned in order from the outside to the inside:
an outside surface layer comprising polyester, polyamide, polystyrene, polycarbonate, poly(methyl methacrylate), cyclic olefin copolymer, polypropylene, high density polyethylene, or combinations thereof;
a polyamide layer in direct contact with the delamination layer;
a delamination layer in direct contact with the polyamide layer comprising an anhydride-modified polymer comprising a base polymer comprising a polyethylene homopolymer or copolymer, polypropylene homopolymer or copolymer, or an ethylene copolymer comprising copolymerized units derived from ethylene and at least one additional polar comonomer, wherein the base polymer is grafted with up to 1 weight % of an unsaturated dicarboxylic acid anhydride, preferably maleic anhydride; or an acid copolymer or ionomer thereof; wherein the adhesion between the polyamide layer and the delamination layer is from 0.1 to 10 N/15mm, preferably from 2 to 8 N/15mm; and
an inside surface sealant layer comprising a polyolefin polymer comprising a polyethylene homopolymer or copolymer, ethylene alkyl (meth)acrylate copolymer, or an ethylene alkyl (meth)acrylic acid copolymer or ionomer thereof, or mixtures thereof.

2. The coextruded multilayer film according to claim 1 prepared by a triple bubble process.

3. The coextruded multilayer film according to claim 1 or 2, wherein the composition of the sealant layer comprises a mixture of at least one of a polyethylene polymer, ethylene alkyl (meth)acrylate copolymer, ethylene (meth)acrylate copolymer or ionomer thereof, and at least one polybutylene polymer; preferably wherein the composition of the sealant layer comprises from 90 to 98 weight percent of the at least one ethylene polymer, ethylene alkyl (meth)acrylate copolymer, ethylene (meth)acrylate copolymer or ionomer thereof, and from 2 to 10 weight percent of the at least one polybutylene polymer, the weight percent being based on the total weight of the sealant layer composition.

4. The film of claim 1, 2 or 3 further comprising at least one additional layer, including a gas barrier layer, adhesion layer other than the delamination layer or combinations thereof; preferably wherein the gas barrier layer comprises ethylene vinyl alcohol copolymer, cyclic olefin copolymers, polyvinyl acetate, or blends thereof with polyethylene, polyvinyl alcohol, or polyamide.

5. The film of claim 1, 2, 3, or 4 wherein the external layer comprises polyethylene therephthalate.

6. A pouch or flexible container prepared from the film of any of claims 1 through 5, wherein one portion of the film is overlaid with a second portion of the film so that a portion of the inside surface sealant layer is in contact with a second portion of the inside surface sealant layer, and a portion of the perimeter of the pouch is heat sealed with an initiation peel force greater than 15 N/15mm, leaving a portion of the perimeter unsealed to provide an opening to the interior of the pouch; preferably wherein the pouch comprises a gusseted or fin seal.

7. The pouch of claim 6, containing a product in the interior of the pouch, wherein the opening is heat sealed with a seal strength **characterized by** an initiation peel force less than about 13 N/15mm and a peel propagation force less than about 60% of the initiation force.

8. The pouch of claim 7 wherein the product comprises a dry good; preferably an edible good such as potato chips, cookies, candy, breakfast cereal, dried vegetables, rice, coffee beans or ground coffee, nuts, or dairy powders.

9. The pouch of any of claims 6 through 8 exhibiting shrinkage of greater than 2% and less than 70% and exhibit secondary sealing behavior.

10. A method for preparing the film of any of claims 1 through 5, comprising the steps of coextruding a tubular multilayer film structure, cooling the coextruded tubular multilayer film structure in a first bubble, mono- or bi-axially orienting the coextruded tubular multilayer film structure under heating in a second bubble, and thermofixing the biaxially oriented coextruded tubular multilayer film structure under heating in a third bubble.

11. The method of claim 10 further comprising preparing a pouch by overlaying a portion of the film with a second portion of the film so that the sealant layers are in contact, heating a portion of the overlaying film layers with sufficient heat, pressure and time to provide a perimeter seal with an initiation peel force greater than 15 N/15mm, and cutting the film to provide a pouch with a portion of the perimeter sealed and leaving a portion of the perimeter unsealed to provide an opening to the interior of the pouch.

12. The method of claim 11 further comprising placing a product into the interior of the pouch through the opening and heat sealing the opening using heat, pressure and time selected so that the opening is sealed with a seal strength **characterized by** an initiation peel force less than about 13 N/15mm and a peel propagation force less than about 60% of the initiation force.

13. The method of claim 12 wherein the product comprises a dry good; preferably wherein the product comprises an edible good such as potato chips, cookies, candy, breakfast cereals, dried vegetables, rice, coffee beans or ground coffee, nuts, or dairy powders.

## Patentansprüche

1. Coextrudierte, biaxial orientierte Lebensmittelverpackungsfolie umfassend die folgende Schichtstruktur, die in der Reihenfolge von der Außenseite zur Innenseite positioniert ist:
eine äußere Oberflächenschicht umfassend Polyester, Polyamid, Polystyrol, Polycarbonat, Poly(methylmethacrylat), cyclisches Olefincopolymer, Polypropylen, Polyethylen hoher Dichte oder Kombinationen davon;
eine Polyamidschicht in direktem Kontakt mit der Delaminierungsschicht;
eine Delaminierungsschicht in direktem Kontakt mit der Polyamidschicht umfassend ein anhydridmodifiziertes Polymer umfassend ein Basispolymer umfassend ein Polyethylen-Homopolymer oder -Copolymer, Polypropylen-Homopolymer oder - Copolymer oder ein Ethylencopolymer umfassend copolymerisierte Einheiten, die von Ethylen abgeleitet sind, und mindestens ein zusätzliches polares Comonomer, wobei das Basispolymer mit bis zu 1 Gew.-% eines ungesättigten Dicarbonsäureanhydrids, bevorzugt Maleinsäureanhydrids, gepfropft ist; oder ein Säurecopolymer oder Ionomer davon, wobei die Haftung zwischen der Polyamidschicht und der Delaminimierungsschicht 0,1 bis 10 N/15 mm, bevorzugt 2 bis 8 N/15 beträgt; und
eine innere Oberflächenversiegelungsmittelschicht umfassend ein Polyolefinpolymer umfassend ein Polyethylen-Homopolymer oder -Copolymer, Ethylen-Alkyl(meth)acrylat-Copolymer oder ein Ethylen-Alkyl(meth)acrylsäure-Copolymer oder Ionomer davon oder Mischungen davon.

2. Coextrudierte mehrschichtige Folie nach Anspruch 1, die durch ein Dreifachblasenverfahren hergestellt wird.

3. Coextrudierte mehrschichtige Folie nach Anspruch 1 oder 2, wobei die Zusammensetzung der Versiegelungsmittelschicht eine Mischung von mindestens einem von einem Polyethylenpolymer, Ethylen-Alkyl(meth)acrylat-Copolymer, Ethylen-(Meth)acrylat-Copolymer oder Ionomer davon, und mindestens ein Polybutylenpolymer umfasst; wobei bevorzugt die Zusammensetzung der Versiegelungsmittelschicht 90-98 Gewichtsprozent des mindestens einen Ethylenpolymers, Ethylen-Alkyl(meth)acrylat-Copolymers, Ethylen(meth)acrylat-Copolymers oder Ionomers davon und 2 bis 10 Gewichtsprozent des mindestens einen Polybutylenpolymers umfasst, wobei der Gewichtsprozentsatz auf das Gesamtgewicht der Versiegelungsmittelschichtzuammensetzung bezogen ist.

4. Folie nach Anspruch 1, 2 oder 3, ferner mindestens eine zusätzliche Schicht umfassend, die eine Gasbarriereschicht, Haftschicht, bei der es sich nicht um die Delaminierungsschicht handelt, oder Kombinationen davon umfasst; wobei bevorzugt die Gasbarriereschicht Ethylenvinylalkoholcopolymer, cyclisches Olefincopolymer, Polyvinylacetat oder Abmischungen davon mit Polyethylen, Polyvinylalkohol oder Polyamid umfasst.

5. Folie nach Anspruch 1, 2, 3 oder 4, wobei die Außenschicht Polyethylenterepthalat umfasst.

6. Beutel oder flexibler Behälter, der aus der Folie nach irgend einem der Ansprüche 1 bis 5 hergestellt ist, wobei in Teil der Folie mit einem zweiten Teil der Folie überlagert ist, so das ein Teil der inneren Oberflächenversiegelungsschicht in Kontakt mit einem zweiten Teil der inneren Oberflächenversiegelungsschicht steht und ein Teil des Perimeters des Beutels mit einer Anfangsschälkraft von mehr als 15 N/15 mm wärrmeversiegelt ist, wobei ein Teil des Perimeters unversiegelt gelassen wird, um eine Öffnung zum Inneren des Beutels bereitzustellen; wobei bevorzugt der Beutel eine mit einem Zwickel versehene oder Rippenversiegelung umfasst.

7. Beutel nach Anspruch 6, enthaltend ein Produkt im Inneren des Beutels, wobei die Öffnung mit einer Versiegelungsstärke wärmeversiegelt ist, die durch eine Anfangsschälkraft von weniger als etwa 13 N/15 mm und eine Schälausbreitungakraft von weniger als etwa 60 % der Angangskraft gekennzeichnet ist.

8. Beutel nach Anspruch 7, wobei das Produkt eine trockene Ware, bevorzugt eine essbare Ware wie Kartoffelchips, Kekse, Süßigkeiten, Frühstückscerealien, getrocknete Gemüse, Reis, Kaffeebohnen oder gemahlenen Kaffee, Nüsse oder Milchpulver umfasst

9. Beutel nach irgendeinem der Ansprüche 6 bis 8, der eine Schrumpfung von mehr als 2 % und weniger als 70 % und ein sekundäres Versiegelungsverhalten aufweist.

10. Verfahren für die Herstellung der Folie nach irgendeinem der Ansprüche 1 bis 5, umfassend die Schritte des Coextrudierens einer röhrenförmigen mehrschichtigen Folienstruktur, Kühlens der coextrudierten, röhrenförmigen, mehrschichtigen Folienstruktur in einer ersten Blase, mono- oder biaxialen Orientierens der coextrudierten, röhrenförmigen, mehrschichtigen Folienstruktur unter Erhitzen in einer zweiten Blase und Thermofixierens der biaxial orientierten, coextrudierten, röhrenförmigen, mehrschichtigen Folienstruktur unter Erhitzen in einer dritten Blase.

11. Verfahren nach Anspruch 10, ferner das Herstellen eines Beutels umfassend durch Überlagern eines Teils der Folie mit einem zweiten Teil der Folie, so dass die Versiegelungsschichten in Kontakt miteinander stehen, Erhitzen eines Teils der überlagerten Folienschichten mit ausreichend Hitze, Druck und Zeit, um eine Perimeterversiegelung mit einer Anfangsschälkraft von mehr als 15 N/15 mm bereitzustellen, und Schneiden der Folie, um einen Beutel bereitzustellen, bei dem ein Teil des Perimeters versiegelt ist und ein Teil des Perimeters unversiegelt gelassen wird, um eine Öffnung zum Inneren des Beutels bereitzustellen.

12. Verfahren nach Anspruch 11, ferner das Positionieren eines Produkts in das Innere des Beutels durch eine Öffnung und Wärmeversiegeln der Öffnung unter Anwendung von Hitze, Druck und Zeit umfassend, die so ausgewählt werden, dass die Öffnung mit einer Versiegelungsstärke versiegelt wird, die durch eine Anfangsschälkraft von weniger als etwa 13 N/15 mm und eine Schälausbreitungskraft von weniger als etwa 60 % der Anfangskraft gekennzeichnet ist.

13. Verfahren nach Anspruch 12, wobei das Produkt eine trockene Ware ist; wobei das Produkt bevorzugt eine essbare Ware wie Kartoffelchips, Kekse, Süßigkeiten, Frühstückscerealien, getrocknete Gemüse, Reis, Kaffeebohnen oder gemahlenen Kaffee, Nüsse oder Milchpulver umfasst.

## Revendications

1. Film d'emballage alimentaire coextrudé biaxialement orienté comprenant la structure en couche suivante positionnée dans l'ordre depuis l'extérieur vers l'intérieur:
une couche de surface externe comprenant du polyester, du polyamide, du polystyrène, du polycarbonate, du poly(méthacrylate de méthyle), un copolymère d'oléfine cyclique, du polypropylène, un polyéthylène haute densité, ou leurs combinaisons;
une couche de polyamide en contact direct avec la couche de déstratification;
une couche de déstratification en contact direct avec la couche de polyamide comprenant un polymère modifié avec un groupe anhydride comprenant un polymère de base comprenant un homopolymère ou un copolymère de polyéthylène, un homopolymère ou un copolymère de polypropylène, ou un copolymère d'éthylène comprenant des motifs copolymérisés dérivés d'éthylène et au moins un comonomère polaire additionnel, le polymère de base étant greffé avec jusqu'à 1 % en poids d'un anhydride d'acide dicarboxylique insaturé, préférablement un anhydride maléique; ou un copolymère d'acide ou son ionomère; l'adhésion entre la couche de polyamide et la couche de déstratification étant de 0,1 à 10 N/15 mm, préférablement de 2 à 8 N/15 mm; et
une couche d'étanchéité de surface interne comprenant un polymère de polyoléfine comprenant un homopolymère ou un copolymère de polyéthylène, un copolymère d'éthylène-(méth)acrylate d'alkyle, ou un copolymère d'éthylène-acide alkyl (méth)acrylique ou son ionomère, ou leurs mélanges.

2. Film multicouche coextrudé selon la revendication 1 préparé selon un procédé de formation en enceinte triple.

3. Film multicouche coextrudé selon la revendication 1 ou 2, la composition de la couche d'étanchéité comprenant un mélange d'au moins l'un d'un polymère de polyéthylène, d'un copolymère d'éthylène-(méth)acrylate d'alkyle, d'un copolymère de (méth)acrylate d'éthylène ou son ionomère, et au moins un polymère de polybutylène; préférablement la composition de la couche d'étanchéité comprenant de 90 à 98 pour cent en poids dudit polymère d'éthylène, du copolymère d'éthylène-(méth)acrylate d'alkyle, du copolymère de (méth)acrylate d'éthylène ou son ionomère, et de 2 à 10 pour cent en poids dudit au moins un polymère de polybutylène, le pourcentage en poids étant basé sur le poids total de la composition de couche d'étanchéité.

4. Film selon la revendication 1, 2 ou 3 comprenant en outre au moins une couche additionnelle, comprenant une couche formant barrière aux gaz, une couche d'adhésion autre que la couche de déstratification ou leurs combinaisons; préférablement la couche formant barrière aux gaz comprenant un copolymère d'éthylène-alcool de vinyle, des copolymères d'oléfine cyclique, du poly(acétate de vinyle), ou leurs mélanges avec du polyéthylène, du poly(alcool de vinyle), ou du polyamide.

5. Film selon la revendication 1, 2, 3, ou 4, la couche externe comprenant du poly(téréphtalate d'éthylène).

6. Sachet ou récipient souple préparé à partir du film selon l'une quelconque des revendications 1 jusqu'à 5, une partie du film étant recouverte d'une seconde partie du film de sorte qu'une partie de la couche d'étanchéité de surface interne se trouve en contact avec une seconde partie de la couche d'étanchéité de surface interne, et une partie du périmètre du sachet est thermiquement scellée avec une force de décollement d'initiation supérieure à 15 N/15 mm, laissant une partie du périmètre non scellé pour offrir une ouverture à l'intérieur du sachet; préférablement le sachet comprenant un scellage à soufflet ou à bords repliés.

7. Sachet selon la revendication 6, contenant un produit dans l'intérieur du sachet, l'ouverture étant thermiquement scellée avec une force de scellement **caractérisée par** une force de décollement d'initiation inférieure à environ 13 N/15 mm et une force de propagation de décollement inférieure à environ 60 % de la force d'initiation.

8. Sachet selon la revendication 7, le produit comprenant un bien sec; préférablement un bien comestible tel que des chips de pomme de terre, des cookies, des bonbons, une céréale pour petit déjeuner, des légumes secs, du riz, des fèves de café ou du café moulu, des noix, ou des poudres d'origine laitière.

9. Sachet selon l'une quelconque des revendications 6 jusqu'à 8 faisant preuve d'un rétrécissement supérieur à 2 % et inférieur à 70 % et faisant preuve d'un comportement secondaire d'étanchéité.

10. Procédé de préparation du film selon l'une quelconque des revendications 1 jusqu'à 5, comprenant les étapes de coextrusion d'une structure de film multicouche tubulaire, le refroidissement de la structure de film multicouche tubulaire coextrudée dans une première enceinte, l'orientation mono- ou biaxiale de la structure de film multicouche tubulaire coextrudée sous chauffage dans une seconde enceinte, et le thermofixage de la structure de film multicouche tubulaire coextrudée biaxialement orientée sous chauffage dans une troisième enceinte.

11. Procédé selon la revendication 10 comprenant en outre la préparation d'un sachet par recouvrement d'une partie du film avec une seconde partie du film afin que les couches d'étanchéité se trouvent en contact, chauffage d'une partie des couches de film superposées avec suffisamment de chaleur, de pression et de temps pour fournir un joint dans le périmètre avec une force de décollement d'initiation supérieure à 15 N/15 mm, et coupe du film pour fournir un sachet ayant une partie du périmètre scellé et laissant une partie du périmètre non scellé pour fournir une ouverture vers l'intérieur du sachet.

12. Procédé selon la revendication 11 comprenant en outre la mise en place d'un produit dans l'intérieur du sachet à travers l'ouverture et le thermoscellage de l'ouverture en utilisant de la chaleur, de la pression et du temps sélectionnés afin que l'ouverture soit scellée avec une force de scellement **caractérisée par** une force de décollement d'initiation inférieure à environ 13 N/15 mm et une force de propagation de décollement inférieure à environ 60 % de la force d'initiation.

13. Procédé selon la revendication 12, le produit comprenant un bien sec; préférablement le produit comprenant un bien comestible tel que des chips de pomme de terre, des cookies, des bonbons, une céréale pour petit déjeuner, des légumes secs, du riz, des fèves de café ou du café moulu, des noix, ou des poudres d'origine laitière.
